# EUROPEAN PATENT SPECIFICATION

(11) **EP 2 851 151 B1**
(45) Date of publication and mention of the grant of the patent: **23.08.2017**
(21) Application number: 13185347.5
(22) Date of filing: 20.09.2013
(51) Int. Cl.: B23K 1/00, B23K 1/19, B23K 1/20, C04B 37/02, F01D 5/28, F04D 29/30

(54) **Method of fixing through brazing a heat resistant component on a surface of a heat exposed component**
Verfahren zur Befestigung durch Löten einer wärmebeständigen Komponente auf einer Oberfläche einer wärmeexponierten Komponente
Procédé pour fixer par brasage un composant résistant à la chaleur sur une surface d'un composant exposé à la chaleur

(43) Date of publication of application: 25.03.2015
(73) Proprietor: Ansaldo Energia IP UK Limited, London W1G 9DQ (GB)
(72) Inventor: Stuer, Michael, 5443 Niederrohrdorf (CH); Bossmann, Hans-Peter, 79787 Lauchringen (DE); Esquerre, Mathieu, 5432 Neuenhof (CH)
(74) Representative: Bernotti, Andrea

(56) References cited:
- EP-A1- 0 396 026
- JP-A- S62 182 171
- JP-A- S62 182 172
- JP-A- 2002 373 955
- JP-A- 2005 322 915
- JP-A- 2008 311 296
- US-A- 4 690 793
- US-A1- 2008 265 005
- US-A1- 2010 260 960
- DATABASE WPI Week 198718 Thomson Scientific, London, GB; AN 1987-127037 XP002721327, -& JP S62 70274 A (HITACHI CHEM CO LTD) 31 March 1987 (1987-03-31)

## Description

### Technical Field

The invention relates to a method of fixing a heat resistant component on a surface of a heat exposed component according to the preamble of claim 1 (see, for example, US4 690 793 A1).

### Background of the Invention

The current thermal barrier coatings (TBCs) may reach their application limits in high advanced gas turbines due to the limited capacities to control their micro-structure from the process parameters and the reduced choice of materials suitable for thermal plasma spraying. One way to overcome these limitations is to move away from the TBC coatings and replace them with so called ceramic tiles which can be fixed on the surface of the heat exposed component with different fastening technologies.

The document US 7,198,860 B2 discloses a ceramic tile insulation for gas turbine components with a multitude of ceramic tiles which are bonded to a heat exposed surface of a gas turbine component. A first layer of individual ceramic tiles are bonded to the surface of the gas turbine component which is of ceramic material. A second layer of individual tiles is bonded on top of the first layer.

The ceramic tiles maybe bonded by applying adhesive to the back of each tile, to the surface of the substrate or to both. Each individual tile is than pressed onto the surface of the substrate and a permanent bond is achieved by drying and firing at an elevated temperature up to 1200°C. The tiles are bonded to the substrate over their complete surface facing the bond joint.

### Summary of the Invention

It is an object of the invention to provide an enhanced method of fixing heat resistant components, preferably in shape of plate-like ceramic tiles each limited by a peripheral boundary edge, on the surface of a heat exposed component using a molten solder, which enables that the heat resistant components are fastened on the surface in a solid and durable way and in particular free from thermal stresses. A method of fixing a heat resistant component on a surface of a heat exposed component according to the present invention is defined in claim 1. The invention can be modified advantageously by the features disclosed in the sub claims as well in the following description especially referring to preferred embodiments.

Intensive investigations carried out by the inventors on joints between ceramic heat resistant components, in the following ceramic tiles, and a metallic surface of a heat exposed component, like turbine blades, showed that if edges of individual ceramic tiles are not bonded to the metal substrate, the ceramic tile will remain largely stress free under heat exposed conditions. In the opposite case, if the ceramic tiles are fully bonded up to their edges on the metallic surface large stresses can be develop causing a delamination of the individual tiles.

To avoid the before described delaminations of individual ceramic tiles from the metallic surface of the heat exposed component alternative methods are proposed inventively to avoid bonding the edges, preferably at least a part of the peripheral boundary edge of a ceramic tile on the surface of the heat exposed component. The technical problem behind the inventive methods was the quest for a robust method that would not impose any dimensional tolerances during production to ensure a defect free and proper joining between the ceramic tile and the heat exposed component.

To ensure that the molten solder during brazing does not cover and accordingly wet the ceramic surface area along the peripheral boundary edge of the ceramic tile both the ceramic material of the ceramic tile and the solder material are chosen in view of their physical-chemical properties in particular concerning wettability such that the molten solder doesn't have the affinity to wet the ceramic surface of the ceramic tile. According to the present invention, it is proposed to work with a braze metal alloy as solder material which does not wet the ceramic surface of the heat resistant component unless such surface has undergone metallization before. Thus the braze area respectively solder area, which corresponds to the joint area, can be defined in shape and size by the metallization process during which a metal layer is be coated onto a defined area of the surface of the ceramic tile as inventively required.

Due to suitable structuring of at least one of the two surfaces to be joined by brazing the peripheral boundary edge of the ceramic tile encloses a free gap with the surface of the heat exposed component after brazing. One preferred embodiment for structuring will be illustrates in one of the following figures.

A preferred solder material respectively braze material is a braze metal alloy which has good wettability properties on metallic surfaces which are in case of the first inventive method described before the surface of the heat exposed component and the metallized surface of the ceramic tile.

The heat resistant component as mentioned before is in a preferred embodiment a ceramic tile which can be either a monolithic ceramic or ceramics with a multilayer structure or a ceramic matrix composite. The ceramic tile preferably has a plate thickness between 1 mm and 10 mm preferably 6 mm and a plate surface size between 0,5 cm² and 10 cm². The expression "heat resistant component" is not limited to a ceramic tile, rather all ceramic bodies which are suitable for applying onto the surface of a heat exposed component in particular metal components of a combustor or turbine of a gas turbine or steam turbine arrangement are conceivable.

A preferred solution consists in the fact that a least one intermediate layer or body is integrated into the molten solder with a value of the thermal expansion coefficient for the temperature range from 25°C to 1000°C is between the respective values of ceramic (1) and metallic substrate (4). The final aim of this embodiment is to reduce the shear stress due to mismatch of the thermal expansion of both joint elements (1, 4). The intermediate body could be formed as sheet or as powder.

### Brief Description of the Figures

The invention shall subsequently be explained in more detail based on exemplary embodiments in conjunction with the drawing. In the drawing
- Fig. 1: cross section view through a joint between a ceramic tile and a metallic substrate using metallization,
- Fig. 2: cross section view through a joint between a ceramic tile and a metallic substrate using a distance layer, and
- Fig. 3a,b: cross section views of a joint between a structured ceramic tile and a metallic substrate.

### Detailed Description of exemplary Embodiments

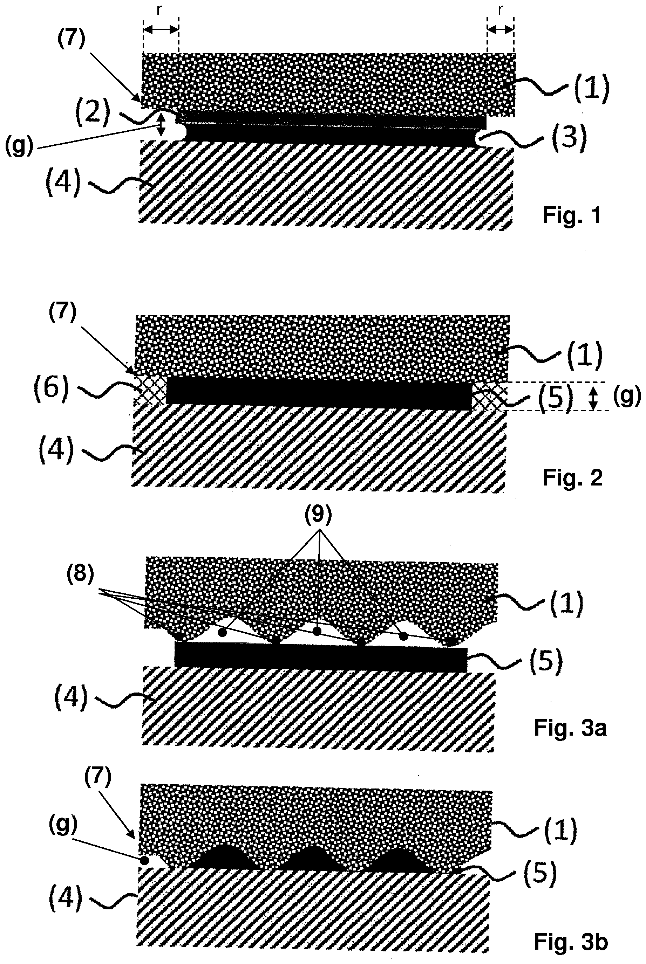

Fig. 1 shows a cross section view of a joint between a heat resistant component 1 made of ceramic material which is in shape of a tile, and a heat exposed component 4 providing a metallic surface. The heat exposed component 4 preferably is a metallic component of a gas or steam turbine arrangement, for example a combustion liner of a combustor, a blade, vane or heat shield element of a turbine.

To enhance the heat resistant of the heat exposed component 4 the ceramic tile 1 is bonded onto the metallic surface of the heat exposed component 4. To avoid significant thermal stresses in ceramic tile 1 the edges 7 of the ceramic tile 1 are free and excluded from the bond joint between both components 1 and 4. To realize the gap g between the peripheral boundary edge 7 and the metallic surface of the heat exposed component 4 the ceramic tile 1 is metallized in a first step before joining at the surface facing the heat exposed component 4. Metallization is performed such that the edge area comprising the peripheral boundary edge 7 is excluded from metallization so that a rim area r along the peripheral boundary edge 7 will remain as ceramic surface. After metallization a metallic layer 2 covers a part of the surface of the ceramic tile 1 facing the metallic surface of the heat exposed component 4.

In a following step the metallic surface of the heat exposed component 4 is brazed onto the metallized surface 2 using a molten solder 3 which wets the surface of the metallized surface 2 only but which is not able to wet the free ceramic surface at the rim area r of the ceramic tile 1 in the edge area comprising the peripheral boundary edge 7.

After brazing a gap g near the peripheral boundary edge 7 will remain between the ceramic tile 1 and the heat exposed component 4.

Fig. 2 shows an alternative example for creating a gap g between the edge area comprising the peripheral bound edge 7 of the ceramic tile 1 and the heat exposed component 4.

In case of figure 2 the edge area comprising the peripheral boundary edge 7 is coated first with a distance layer 6 which acts as a physical barrier preventing the molten solder from spreading over the whole ceramic surface of the ceramic tile 1.

The distance layer 6, preferably is of carbon or polymeric material, ensures that molten solder cannot wet the edge area comprising the peripheral boundary edge 7. The wettability of the ceramic surface of the ceramic tile 1 and the molten solder material are chosen such that the molten solder is able to wet the ceramic surface of the ceramic tile 1 as well the metallic surface of the heat exposed component 4. The brazing process will be carried out under protective atmosphere conditions so that the distance layer 6 can get through the brazing step without damage. Figure 2 shows the result after the brazing step. To remove the distance layer 6 a further burning process under air conditions is necessary to burn out the distance layer 6 by oxidation processes to create the free gap between the edge area and the metallic surface of the heat exposed component 4.

Figure 3a and b show a further alternative method for fixing a heat resistant component in shape of a ceramic tile 1 on a metallic surface of a heat exposed component 4 by brazing. In difference to the embodiments described in connection with figures 1 and 2 in which the surfaces to be brazed together are of plane shape, the surface of the ceramic tile 1 is structured wave-like so that the peripheral boundary edge 7 is disposed recessed relative to wave-crest points 8 of the structured surface of the ceramic tile 1.

Further the braze respectively solder material 5 is chosen such that the molten solder 5 wets the ceramic structured surface of the ceramic tile 1 as well the metallic surface of the heat exposed component 4. The layer thickness and the surface dimension of the solder material 5 correspond with the recess volume of the structured ceramic surface of the tile 1 so that the molten solder material 5 fills out the space 9 which is enclosed by both surfaces of the ceramic tile and heat exposed components 1, 4 being in contact with each other.

Figure 3b shows the joint after brazing in which the space 9 is filled completely with solder material 5. Further no solder material 5 is in the gap g between the edge area comprising the peripheral boundary edge 7 and the metal surface of the heat exposed component 4.

It is also possible to structure the metallic surface of the heat exposed component 4 alternatively or in combination with structuring the surface of the ceramic tile 1 shown in figures 3a and b. According to the invention as defined in the appended claims, the structuring of the surfaces like in case of fig. 3a, b is also applied in the examples shown in figures 1 and 2.

### List of References Numerous

- 1: heat resistant component
- 2: metallizing
- 3: molten solder
- 4: heat exposed component
- 5: molten solder
- 6: distance layer
- 7: peripheral boundary edge
- 8: crest-points
- 9: space
- g: gap
- r: rim area

## Claims

1. Method of fixing a heat resistant component (1) on a surface of a heat exposed component (4), by brazing of at least a part of a surface of the heat resistant component (1) limited by a peripheral boundary edge (7) on the surface of the heat exposed component (4) using a molten solder (3), comprising
- metalizing the surface of the heat resistant component (1) and
**characterized in that**, in combination:
- the metalizing is carried out with the exception of an edge area (r) of the surface of the heat resistant component (1), the edge area (r) comprising the peripheral boundary edge (7),
- at least the surface of the heat resistant component (1) consists is of a ceramic material which has a physico-chemical property concerning wettability such that the ceramic material is not wettable by the molten solder (3),
- a metal alloy is used for metalizing which has a physico-chemical property concerning wettability such that the metalizing and the heat exposed component (4) are both wettable by the molten solder (3), and
- structuring the contact surface of the heat resistant component (1) and/or the surface of the heat exposed component (4) such that the edge area (r) of the heat resistant component comprising the peripheral boundary edge (7) does not have a contact to the surface of the heat exposed component (4) after contacting both,
wherein the layer thickness and the surface dimension of the solder material (5) correspond with the recess volume of the structured surface,
- brazing said metalized surface (2) to the surface of the heat exposed component (4) by using the molten solder (3), the layer thickness and the surface dimension of the solder material (5) filling out the space (9) enclosed by both surfaces, so that after brazing the surfaces of the heat resistant component (1) and the heat exposed component (4) are in contact with each other, and so that the edge area (r) of the heat resistant component remains free from the molten solder (3) and spaced apart by a gap (g) from the heat exposed component (4).

2. Method according to claim 1,
**characterized in that** the solder (3) is a braze metal alloy.

3. Method according to one of the claims 1 or 2,
**characterized in that** the heat resistant component (1) is a plate-like component of ceramic material having a plate thickness between 1 mm and 10 mm, preferably 6 mm and a plate surface size between 0,5 cm² and 10 cm².

4. Method according to anyone of claims 1 to 3, **characterized by** integrating at least one additional intermediate layer or body into the molten solder with a value of the thermal expansion coefficient for the temperature range from 25°C to 1000°C is between the respective values of ceramic (1) and metallic substrate (4).

## Patentansprüche

1. Verfahren zur Befestigung eines hitzebeständigen Bauteils (1) an einer Oberfläche eines hitzeexponierten Bauteils (4) durch Hartlöten mindestens eines von einem Umfangsbegrenzungsrand (7) begrenzten Teils einer Fläche des hitzebeständigen Bauteils (1) an der Fläche des hitzeexponierten Bauteils (4) mittels eines geschmolzenen Lots (3), wobei das Verfahren folgende Schritte umfasst:
- Metallisieren der Fläche des hitzebeständigen Bauteils (1) und
[Hartlöten der metallisierten Fläche (2) an der Fläche des hitzeexponierten Bauteils (4) mittels des geschmolzenen Lots (3)]
**gekennzeichnet dadurch, dass**, in Kombination:
- die Metallisierung nicht in einem Randbereich (r) der Fläche des hitzebeständigen Bauteils (1) durchgeführt wird, wobei der Randbereich (r) den Umfangsbegrenzungsrand (7) umfasst,
- mindestens die Fläche des hitzebeständigen Bauteils (1) aus einem Keramikwerkstoff besteht, der hinsichtlich der Benetzbarkeit eine physikalisch-chemische Eigenschaft aufweist, die bewirkt, dass der Keramikwerkstoff nicht von dem geschmolzenen Lot (3) benetzt wird,
- zur Metallisierung eine Metalllegierung verwendet wird, die hinsichtlich der Benetzbarkeit eine physikalisch-chemische Eigenschaft aufweist, die bewirkt, dass sowohl die Metallisierung als auch das hitzeexponierte Bauteil (4) von dem geschmolzenen Lot (3) benetzt werden, und
- Strukturieren der Kontaktfläche des hitzebeständigen Bauteils (1) und/oder der Fläche des hitzeexponierten Bauteils (4), so dass der den Umfangsbegrenzungsrand (7) umfassende Randbereich (r) des hitzebeständigen Bauteils nach dem Kontakt mit beiden keinen Kontakt mit der Fläche des hitzeexponierten Bauteils (4) hat,
wobei die Schichtdicke und die Flächenabmessung des Lötmittels (5) dem Ausnehmungsvolumen der strukturierten Fläche entsprechen,
[-], die Schichtdicke und die Flächenabmessung des den Raum (9) ausfüllenden Lötmittels (5) von beiden Flächen umschlossen ist, so dass die Fläche des hitzebeständigen Bauteils (1) und die Fläche des hitzeexponierten Bauteils (4) nach dem Hartlöten Kontakt miteinander haben und der Randbereich (r) des hitzebeständigen Bauteils frei von dem geschmolzenen Lot (3) bleibt und durch eine Lücke (g) von dem hitzeexponierten Bauteil (4) räumlich getrennt ist.

2. Verfahren nach Anspruch 1, **gekennzeichnet dadurch, dass** das Lot (3) eine Hartlötmetalllegierung ist.

3. Verfahren nach einem der Ansprüche 1 oder 2, **gekennzeichnet dadurch, dass** das hitzebeständige Bauteil (1) ein plattenähnliches Bauteil aus Keramikwerkstoff mit einer Plattendicke zwischen 1 mm und 10 mm, vorzugsweise 6 mm, und einer Plattenfläche zwischen 0,5 cm² und 10 cm² ist.

4. Verfahren nach jedem der Ansprüche 1 bis 3, **gekennzeichnet dadurch, dass** mindestens eine zusätzliche Zwischenschicht oder ein Zwischenkörper in das geschmolzene Lot eingefügt wird, dessen Wärmedehnungskoeffizient für den Temperaturbereich zwischen 25°C und 1000°C zwischen den entsprechenden Werten des Keramik- (1) und des Metallsubstrats (4) liegt.

## Revendications

1. Procédé de fixation d'un composant résistant à la chaleur (1) sur une surface d'un composant exposé à la chaleur (4), par brasage d'au moins une partie d'une surface du composant résistant à la chaleur (1) limitée par un bord de limite périphérique (7) sur la surface du composant exposé à la chaleur (4) à l'aide d'une brasure fondue (3), comprenant
- la métallisation de la surface du composant résistant à la chaleur (1), et
- le brasage de ladite surface métallisée (2) sur la surface du composant exposé à la chaleur (4) à l'aide de la brasure fondue (3),
**caractérisé en ce que**, en combinaison :
- la métallisation est effectuée à l'exception d'une zone de bord (r) de la surface du composant résistant à la chaleur (1), la zone de bord (r) comprenant le bord de limite périphérique (7),
- au moins la surface du composant résistant à la chaleur (1) se compose d'un matériau céramique qui présente une propriété physico-chimique concernant la mouillabilité, de sorte que le matériau céramique ne soit pas mouillable par la brasure fondue (3),
- un alliage de métal est utilisé pour la métallisation, et présente une propriété physico-chimique concernant la mouillabilité, de sorte que la métallisation et le composant exposé à la chaleur (4) soient mouillables par la brasure fondue (3), et
- la structuration de la surface de contact du composant résistant à la chaleur (1) et/ou de la surface du composant exposé à la chaleur (4) de sorte que la zone de bord (r) du composant résistant à la chaleur qui comprend le bord de limite périphérique (7) n'ait aucun contact avec la surface du composant exposé à la chaleur (4) après le contact avec les deux,
dans lequel l'épaisseur de couche et la dimension de surface du matériau de brasure (5) correspondent au volume de renfoncement de la surface structurée, l'épaisseur de couche et la dimension de surface du matériau de brasure (5) remplissant l'espace (9) enfermé par les deux surfaces, de sorte que, après le brasage, les surfaces du composant résistant à la chaleur (1) et du composant exposé à la chaleur (4) soient en contact l'une avec l'autre, et de sorte que la zone de bord (r) du composant résistant à la chaleur reste exempte de la brasure fondue (3) et espacée d'une distance (g) du composant exposé à la chaleur (4).

2. Procédé selon la revendication 1, **caractérisé en ce que** la brasure (3) est un alliage de métal de brasage.

3. Procédé selon l'une des revendications 1 ou 2, **caractérisé en ce que** le composant résistant à la chaleur (1) est un composant en forme de plaque en matériau céramique qui présente une épaisseur de plaque comprise entre 1 mm et 10 mm, de préférence de 6 mm, et une superficie de plaque comprise entre 0,5 cm² et 10 cm².

4. Procédé selon l'une quelconque des revendications 1 à 3, **caractérisé par** l'intégration d'au moins une couche ou un corps intermédiaire supplémentaire dans la brasure fondue, avec une valeur de coefficient de dilatation thermique pour la plage de températures de 25°C à 1000°C comprise entre les valeurs respectives de la céramique (1) et du substrat métallique (4).
